# EUROPEAN PATENT APPLICATION

(11) **EP 4 553 236 A1**
(43) Date of publication of application: **14.05.2025**
(21) Application number: 23930552.7
(22) Date of filing: 30.03.2023
(51) Int. Cl.: E02F 9/24

(54) **CONSTRUCTION MACHINE**

(71) Applicant: Hitachi Construction Machinery Co., Ltd., Tokyo 110-0015 (JP)
(72) Inventor: KURIHARA, Daisuke, Tsuchiura-shi, Ibaraki 300-0013 (JP); ARAKAWA, Takafumi, Tsuchiura-shi, Ibaraki 300-0013 (JP)
(74) Representative: Manitz Finsterwald Patent- und Rechtsanwaltspartnerschaft mbB
(86) International application number: PCT/JP2023/013241
(87) International publication number: WO 2024/201914

(57) **Abstract**

A hydraulic excavator (1) includes a vehicle body composed of a self-propelled lower traveling structure (2) and an upper revolving structure (3), and an operator's seat (9) provided on the upper revolving structure (3). The upper revolving structure (3) is provided with a fuel cell (11) generating power supplied to an electric motor (14), a hydrogen tank (20) storing hydrogen supplied to the fuel cell (11), a heat exchanger (24) cooling the fuel cell (11), and cooling fans (25C), (25D), (26A), (27A) each supplying a cooling air to the heat exchanger (24). The operator's seat (9) is disposed on the upstream side of the hydrogen tank (20) with respect to a flow direction of a cooling air F1 generated by the cooling fans (25C), (25D), (26A), (27A).

## Description

### TECHNICAL FIELD

The present disclosure relates to a construction machine such as a hydraulic excavator including a fuel cell system.

### BACKGROUND ART

In recent years, environment-friendly fuel cell systems have been employed in several types of construction machines, such as hydraulic excavators. A fuel cell system is configured to include a fuel cell generating power supplied to an electric motor serving as a power source of a construction machine and a hydrogen tank storing hydrogen supplied to the fuel cell (see Patent Document 1).

With a decreased amount of hydrogen gas in a hydrogen tank of a construction machine during its operation, a hydrogen gas needs to be filled into the hydrogen tank, using a vehicle with hydrogen supply equipment (mobile hydrogen supply equipment), for example. In this case, the vehicle with the hydrogen supply equipment is moved to be close to the construction machine and a new hydrogen gas is filled into the hydrogen tank, with a filling nozzle of the hydrogen supply equipment connected to the hydrogen tank. In this configuration, hydrogen gas can be stably supplied to a fuel cell of a construction machine that is operated at a working site.

### PRIOR ART DOCUMENT

### PATENT DOCUMENT

Patent Document 1: Japanese Patent Laid-Open No. 2022-180565 A

### SUMMARY OF THE INVENTION

However, in a case where hydrogen gas is filled from hydrogen supply equipment and supplied to a hydrogen tank included in a construction machine, for example, leakage of hydrogen gas can occur due to abnormal operations in the hydrogen supply equipment or defective filling work of hydrogen, thereby allowing the hydrogen gas to be stagnant around the hydrogen tank. The hydrogen gas stagnant around the hydrogen tank is preferably discharged so as to be swiftly swept away from an operator's seat.

It is an object of the present invention to provide a construction machine capable of discharging hydrogen gas that is present around a hydrogen tank so as to be swiftly swept away from an operator's seat.

A construction machine according to the present invention has a self-propelled vehicle body, wherein the vehicle body includes: an operator' s seat; a fuel cell generating power supplied to an electric motor; a hydrogen tank storing hydrogen supplied to the fuel cell; a heat exchanger cooling the fuel cell; and a cooling fan supplying a cooling air to the heat exchanger, characterized in that the operator's seat is disposed on the upstream side of the hydrogen tank with respect to a flow direction of the cooling air generated by the cooling fan.

According to the present invention, the hydrogen gas that is present around the hydrogen tank can be discharged so as to be swiftly swept away from the operator's seat, using the cooling air flowing from the operator's seat to the hydrogen tank.

### BRIEF DESCRIPTION OF THE DRAWINGS

Fig. 1 is a left side view showing a hydraulic excavator according to a first embodiment of the present invention.
Fig. 2 is a plan view conceptually showing the arrangement of an operator's seat, a fuel cell, a hydrogen tank, a heat exchanger and the like from above.
Fig. 3 is a left side view conceptually showing the arrangement of the operator's seat, the fuel cell, the hydrogen tank, the heat exchanger and the like from the left side.
FIG. 4 is a rear view conceptually showing the arrangement of the heat exchanger from the rear.
Fig. 5 is a block diagram showing the connection of the hydrogen tank, the fuel cell, an electric motor, a controller, the heat exchanger and the like.
Fig. 6 is a flow chart showing control processing for discharging the hydrogen gas present around the hydrogen tank.
Fig. 7 is a plan view conceptually showing the arrangement of an operator's seat, a fuel cell, a hydrogen tank, a heat exchanger and the like from above according to a second embodiment.
Fig. 8 is a left side view conceptually showing the arrangement of a heat exchanger and the like from the left side according to a third embodiment.
Fig. 9 is a left side view conceptually showing the arrangement of a heat exchanger and the like from the left side according to a fourth embodiment.
Fig. 10 is a rear view conceptually showing the arrangement of the heat exchanger and the like from the rear according to the fourth embodiment.
Fig. 11 is a flow chart showing a modification of control processing for discharging hydrogen gas.

### MODE FOR CARRYING OUT THE INVENTION

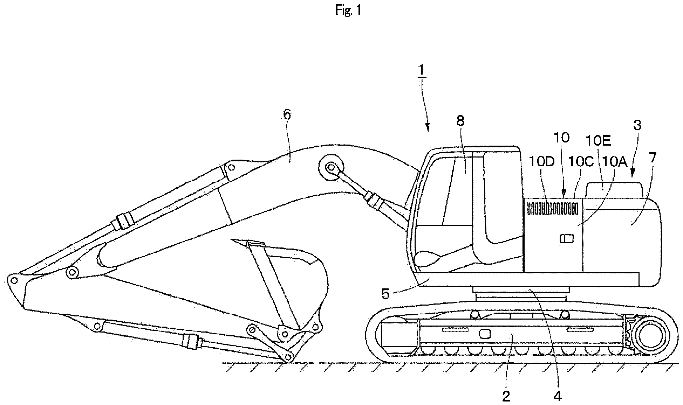

A construction machine according to an embodiment of the present invention, by taking the case of a hydraulic excavator, will be explained in detail with reference to Figs. 1 to 10. In the embodiment, the running direction of a hydraulic excavator is defined as front-and-rear direction, and the direction perpendicular to the running direction of the hydraulic excavator is defined as right-and-left direction.

Figs. 1 to 6 illustrates a construction machine according to a first embodiment of the present invention. A hydraulic excavator 1, as a typical construction machine, includes a self-propelled crawler type lower traveling structure 2 and an upper revolving structure 3 mounted rotatably on the lower traveling structure 2. A vehicle body of the hydraulic excavator 1 is configured by the lower traveling structure 2 and the upper revolving structure 3. The hydraulic excavator 1 includes an electric motor 14 as a power source, a fuel cell 11 generating power supplied to the electric motor 14, and a hydrogen tank 20 storing hydrogen supplied to the fuel cell 11.

The upper revolving structure 3 is mounted rotatably on the lower traveling structure 2 with a revolving device 4 in between. The upper revolving structure 3 has a revolving frame 5 that constitutes a base. The revolving frame 5 is configured to include a center frame 5A located at a center portion in the right-and-left direction, a left side frame 5B and a right side frame 5C disposed on the left and right sides across the center frame 5A. A working mechanism 6 excavating earth and sand, etc. is mounted on the front end side of the revolving frame 5. A counterweight 7 taking a weight balance with the working device 6 is provided on the rear end side of the revolving frame 5. An exhaust port 7A is formed on a rear surface of the counterweight 7.

A cab 8 forming an operator's room is provided on the front left side of the revolving frame 5. An operator's seat 9 for an on-board operator to be seated, a traveling lever device, an operating lever device or the like operated by the operator (each not shown) are provided in the cab 8. An exterior cover 10 is provided on the revolving frame 5 to be located forward of the counterweight 7. The later-described fuel cell 11, the electric motor 14, a hydraulic pump 16, the hydrogen tank 20, a heat exchanger 24 and the like are accommodated within the exterior cover 10. The exterior cover 10 has a left surface 10A, a right surface 10B and an upper surface 10C. An air flow opening 10D communicating the inside and the outside of the exterior cover 10 is formed on the left surface 10A and the right surface 10B. An upper cover 10E is provided on the upper surface 10C, covering a hydrogen tank 20, a heat exchanger 24 and the like protruding upward from the upper surface 10C.

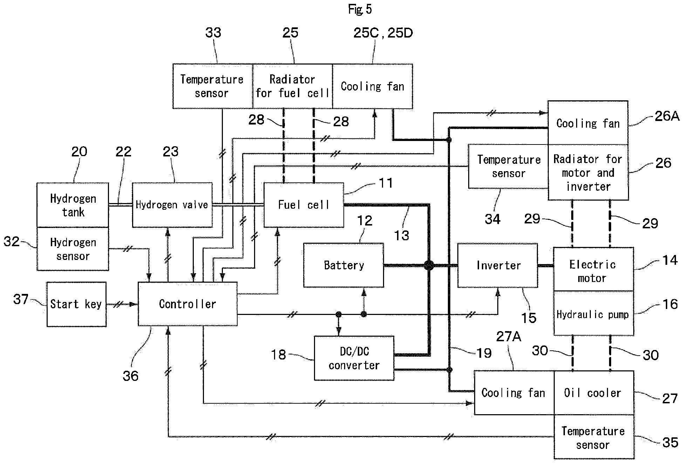

The fuel cell 11 is located rearward of the cab 8 and mounted on the revolving frame 5. The fuel cell 11 constitutes a fuel cell system together with a PCU (Power Control Unit) and an auxiliary machine such as a supercharger (each not shown), for example. The fuel cell 11 generates power supplied to the electric motor 14, using hydrogen supplied from the hydrogen tank 20. A battery (secondary battery) 12 is mounted on the revolving frame 5 to be adjacent to the left side of the fuel cell 11. The battery 12 stores power in excess of the power supplied to the electric motor 14 of the power generated by the fuel cell 11, for example. As shown in Fig. 5, the fuel cell 11 and the battery 12 are connected via a high-voltage cable 13.

The electric motor 14 is adjacent to the right side of the fuel cell 11 and mounted at a central portion of the revolving frame 5 in the right-and-left direction. An inverter 15 is connected to the electric motor 14 via the high-voltage cable 13. The inverter 15 is connected to the fuel cell 11 via the high-voltage cable 13. The inverter 15 converts the direct current power supplied from the fuel cell 11 or the battery 12 into the alternating current power to be supplied to the electric motor 14 to control the rotation of the electric motor 14.

The hydraulic pump 16 is adjacent to the right side of the electric motor 14 and mounted on the revolving frame 5. The hydraulic pump 16 is driven by the electric motor 14 to pressurize and discharge the hydraulic oil reserved in a hydraulic oil tank (not shown). A control valve 17 is mounted on the right front side of the revolving frame 5. The control valve 17 is connected to each type of hydraulic actuator mounted on the hydraulic excavator 1 and the hydraulic pump 16 via hydraulic lines (not shown) to selectively supply the hydraulic oil (pressurized oil) discharged from the hydraulic pump 16 to each of the hydraulic actuators.

A DC/DC converter 18 is connected to the fuel cell 11 via the high-voltage cable 13 and connected to later-described cooling fans 25C, 25D, 26A, 27A via a cable 19. The DC/DC converter 18 converts the direct current power supplied from the fuel cell 11 or the battery 12 into the voltage corresponding to the cooling fans 25C, 25D, 26A, 27A in response to a control signal from a later-described controller 36.

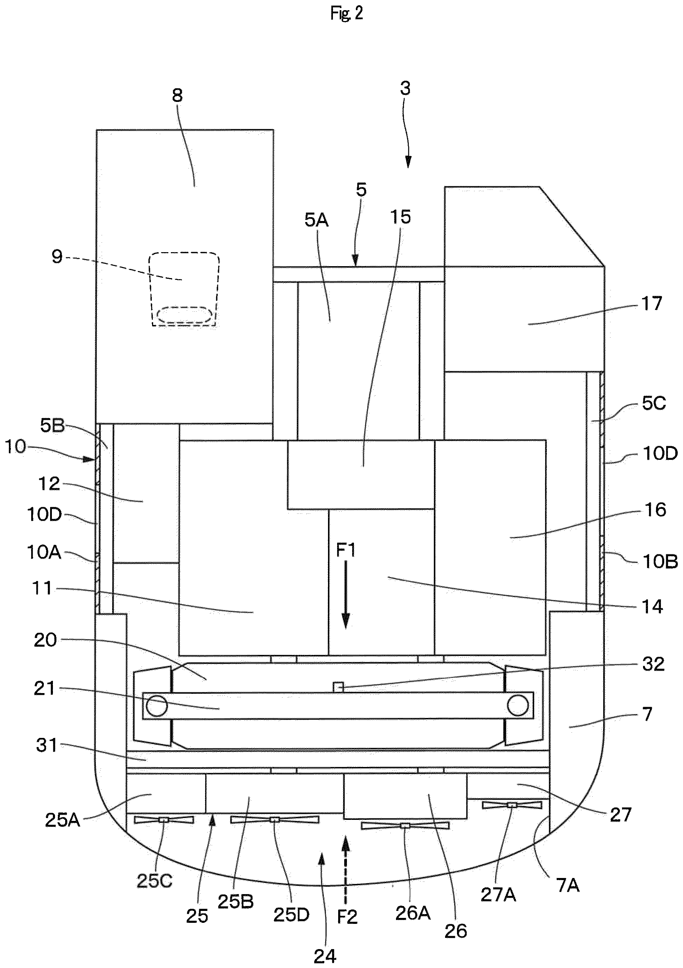

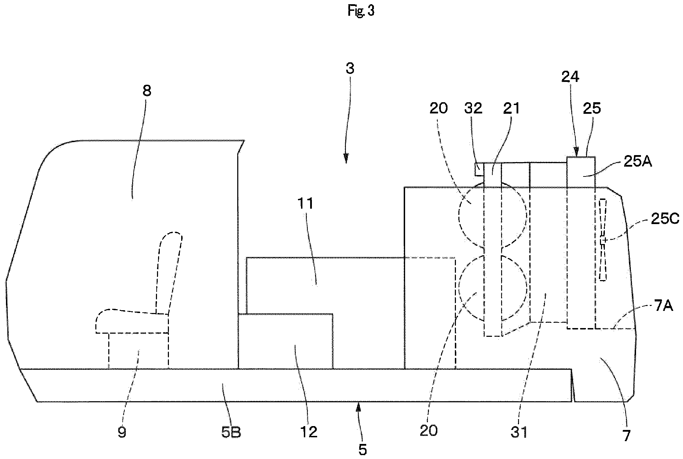

The plurality of hydrogen tanks (hydrogen storage vessel) 20 is located to be surrounded by the fuel cell 11, the electric motor 14 and the counterweight 7 and disposed on the rear side of the revolving frame 5. As shown in Figs. 2 and 3, the hydrogen tank 20 is composed of a cylindrical container excellent in pressure resistance and disposed to extend in the right-and-left direction of the revolving frame 5. Compressed, high-pressure hydrogen gas is stored within the hydrogen tank 20. A rack 21 is fixed on the rear side of the revolving frame 5, and the plurality of hydrogen tanks 20 is held to be aligned in the vertical direction by the rack 21. The hydrogen tank 20 and the fuel cell 11 are connected via a hydrogen gas line 22, and a hydrogen valve 23 is provided in the course of the hydrogen gas line 22. The hydrogen valve 23 opens and closes the hydrogen gas line 22 in response to a control signal from the controller 36, and controls the supply of hydrogen gas from the hydrogen tank 20 to the fuel cell 11.

In order to fill hydrogen gas into the hydrogen tank 20 mounted on the hydraulic excavator 1 during its operation at a working site, a vehicle (not shown) including hydrogen supply equipment, for example, is moved to be close to the hydraulic excavator 1 and a filling nozzle of the hydrogen supply equipment is connected to the hydrogen tank 20. This configuration allows for filling of compressed hydrogen gas into the hydrogen tank 20 to stably supply hydrogen gas to the fuel cell 11 mounted on the hydraulic excavator 1.

The heat exchanger 24 is located between the counterweight 7 and the hydrogen tank 20 and mounted rearward of the revolving frame 5. The heat exchanger 24 is configured to include a radiator for fuel cell 25, a radiator for motor and inverter 26 and an oil cooler 27. The radiator for fuel cell 25, the radiator for motor and inverter 26 and the oil cooler 27 are disposed to be aligned in the right-and-left direction of the revolving frame 5 and face outward of the upper revolving structure 3 through the exhaust port 7A of the counterweight 7. In this way, the mounting of the heat exchanger 24 rearward of the revolving frame 5 allows devices required for regular maintenance such as the battery 12 or an oil filter (not shown) to be disposed near the left surface 10A and the right surface 10B of the exterior cover 10. This configuration can improve the maintainability of these devices.

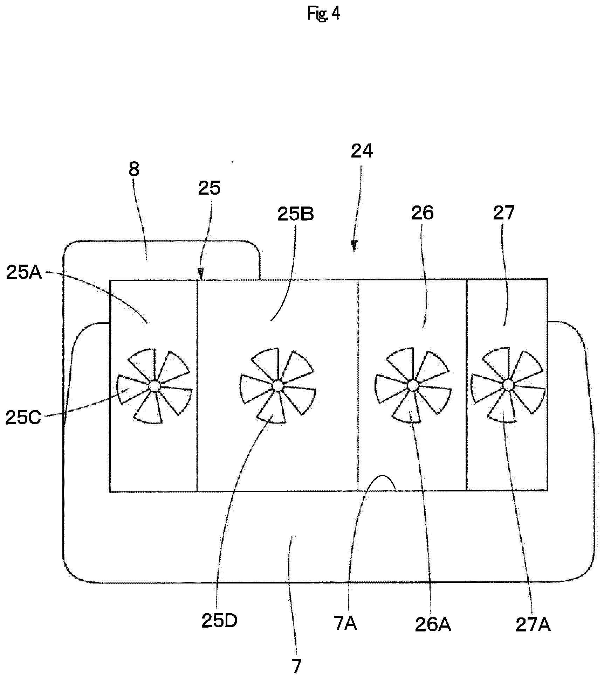

The radiator for fuel cell 25 is disposed rearward of the fuel cell 11. The radiator for fuel cell 25 is connected to the fuel cell 11 and a cooling water circulation path (not shown) provided in an auxiliary machine (e.g., PCU, supercharger) incorporated in the fuel cell 11 via a cooling water passage 28. As shown in Fig. 4, for example, the radiator for fuel cell 25 is configured by the connection of 2 cooling units 25A, 25B. Two cooling fans 25C, 25D are mounted on the rear side of the radiator for fuel cell 25. The cooling fans 25C, 25D are rotated to allow an outdoor air to flow into the exterior cover 10 through the air flow opening 10D formed on the left surface 10A and the right surface 10B of the exterior cover 10. The outdoor air is collected within the exterior cover 10 and then turns into a cooling air F1 represented by a solid arrow moving from the front side (the operator's seat 9 side) to the rear side (the hydrogen tank 20 side) of the revolving frame 5. The cooling air F1 is discharged outward of the upper revolving structure 3 (the exterior cover 10) through the exhaust port 7A of the counterweight 7. At this time, the heat released from the radiator for fuel cell 25 is transferred into the cooling air F1 to cool the fuel cell 11 and the auxiliary machine. In the cooling fans 25C, 25D, each composed of an electrically driven fan, the rotating direction and the rotational speed are controlled in response to a control signal from the controller 36.

The radiator for motor and inverter 26 is disposed rearward of the electric motor 14. The radiator for motor and inverter 26 is connected to a cooling water circulation path (not shown) provided in the electric motor 14 and the inverter 15 via a cooling water passage 29. A cooling fan 26A composed of an electrically driven fan is mounted on the rear side of the radiator for motor and inverter 26. The heat released from the radiator for motor and inverter 26 and transferred into the cooling air F1 generated by the rotation of the cooling fan 26A cools the electric motor 14 and the inverter 15.

The oil cooler 27 is disposed rearward of the hydraulic pump 16. The oil cooler 27 is connected to a hydraulic circuit to which the hydraulic pump 16 and the control valve 17 are connected via a hydraulic passage 30. The cooling fan 27A composed of an electrically driven fan is mounted on the rear side of the oil cooler 27. The heat released from hydraulic oil (return oil) returning from the hydraulic actuator to a hydraulic oil tank (not shown) and transferred into the cooling air F1 generated by the rotation of the cooling fan 27A cools the hydraulic oil.

A shroud 31 is provided between the hydrogen tank 20 and the heat exchanger 24. The shroud 31 is formed of a cylindrical body having a width dimension equivalent to the hydrogen tank 20 in the right-and-left direction of the revolving frame 5. The shroud 31 forms a passage for the cooling air F1 between the hydrogen tank 20 and the heat exchanger 24 and introduces the cooling air F1 generated by the rotation of the cooling fans 25C, 25D, 26A, 27A to the heat exchanger 24 (the radiator for fuel cell 25, the radiator for motor and inverter 26, the oil cooler 27). Herein, the cooling fans 25C, 25D, 26A, 27A and the shroud 31 are disposed on the downstream side of the hydrogen tank 20 with respect to a flow direction of the cooling air F1. This configuration can reduce turbulent flow from the cooling air F1 hitting the hydrogen tank 20, rectify the flow of the cooling air F1 with the shroud 31 and efficiently supply a large amount of cooling air F1 to the heat exchanger 24.

A hydrogen sensor 32 is located within the exterior cover 10 mounted on the revolving frame 5 and provided near the hydrogen tank 20. The hydrogen sensor 32, e.g., in a case where hydrogen gas leakage occurs when hydrogen gas is filled into the hydrogen tank 20, detects the concentration of the hydrogen gas stagnant around the hydrogen tank 20 and outputs a detection signal to the controller 36, depending on the concentration of the hydrogen gas.

A temperature sensor 33 is provided in the cooling water passage 28 connected to the radiator for fuel cell 25. The temperature sensor 33 detects the temperature of the cooling water flowing in and out of the radiator for fuel cell 25 and outputs a detection signal to the controller 36, depending on the temperature. A temperature sensor 34 is provided in the cooling water passage 29 connected to the radiator for motor and inverter 26. The temperature sensor 34 detects the temperature of the cooling water flowing in and out of the radiator for motor and inverter 26 and outputs a detection signal to the controller 36, depending on the temperature. A temperature sensor 35 is provided in the hydraulic passage 30 connected to the oil cooler 27. The temperature sensor 35 detects the temperature of the hydraulic oil flowing in and out of the oil cooler 27 and outputs a detection signal to the controller 36, depending on the temperature of the hydraulic oil.

The controller 36 controls the operation of the fuel cell 11, the battery 12, the inverter 15, the DC/DC converter 18, the hydrogen valve 23, and the cooling fans 25C, 25D, 26A, 27A. The hydrogen sensor 32, the temperature sensors 33, 34, 35 and a start key 37 are connected to the input side of the controller 36. The fuel cell 11, the battery 12, the inverter 15, the DC/DC converter 18, the hydrogen valve 23 and the cooling fans 25C, 25D, 26A, 27A are connected to the output side of the controller 36.

The start key 37 is disposed in the cab 8 and operated by an operator to start the controller 36. The controller 36 starts the battery 12, the inverter 15, the DC/DC converter 18, the hydrogen valve 23 and the fuel cell 11. The controller 36 supplies control signals to the cooling fans 25C, 25D, 26A, 27A to control the operation thereof, based upon detection signals inputted from the hydrogen sensor 32 and the temperature sensors 33, 34, 35.

The hydraulic excavator 1 of this embodiment, which is configured as described above, will be operated by an operator with the start key 37 in the cab 8 to activate the controller 36. Then, the controller 36 powers the inverter 15, the battery 12, the DC/DC converter 18 and the hydrogen valve 23. Once the activation of the inverter 15, the battery 12, the DC/DC converter 18 and the hydrogen valve 23 is completed, the controller 36 starts the fuel cell 11 and thereafter a monitor (not shown) disposed in the cab 8 displays the activation completion of the fuel cell 11.

The operator confirms the activation completion of the fuel cell 11 with the monitor, and operates keys (not shown) disposed in the cab 8. This operation allows for power generation in the fuel cell 11, discharge or charge in the battery 12 and driving of the electric motor 14. As the electric motor 14 drives the hydraulic pump 16, the hydraulic oil (pressurized oil) discharged from the hydraulic pump 16 is supplied to the control valve 17. The control valve 17 selectively supplies hydraulic oil to each type of hydraulic actuator, depending on the operation of a traveling lever device and an operating lever device (each not shown) provided in the cab 8. This mechanism allows the hydraulic excavator 1 to propel itself at a working site and revolve the upper revolving structure 3 to perform excavating work of sand and earth, using the working mechanism 6.

After the fuel cell 11 starts power generation, the controller 36 controls the rotation of the cooling fans 25C, 25D, 26A, 27A in response to detection signals from the temperature sensors 33, 34, 35. That is, the controller 36 determines the rotational speed of the cooling fans 25C, 25D, depending on the temperature of cooling water shown by a detection signal outputted from the temperature sensor 33, determines the rotational speed of the cooling fan 26A, depending on the temperature of cooling water shown by a detection signal outputted from the temperature sensor 34 to supply control signals to the cooling fans 25C, 25D, 26A. Likewise, the controller 36 determines the rotational speed of the cooling fan 27A, depending on the temperature of hydraulic oil shown by a detection signal outputted from the temperature sensor 35 to supply a control signal to the cooling fan 27A.

This mechanism allows the cooling fans 25C, 25D, 26A, 27A to individually rotate and the outdoor air to flow into the exterior cover 10 through the air flow opening 10D formed on the left surface 10A and the right surface 10B of the exterior cover 10. The outdoor air is collected within the exterior cover 10 and then turns into a cooling air F1 represented by a solid arrow moving from the front side (the operator's seat 9 side) to the rear side (the hydrogen tank 20 side) of the revolving frame 5. The cooling air F1 passes through the radiator for fuel cell 25, the radiator for motor and inverter 26 and the oil cooler 27 for cooling, and then will be discharged outward of the upper revolving structure 3 from the exhaust port 7A of the counterweight 7.

This mechanism, during the operation of the hydraulic excavator 1, individually controls the cooling fans 25C, 25D supplying a cooling air to the radiator for fuel cell 25, the cooling fan 26A supplying a cooling air to the radiator for motor and inverter 26 and the cooling fan 27A supplying a cooling air to the oil cooler 27. Thus, the hydraulic oil discharged from the fuel cell 11, the electric motor 14, the inverter 15 and the hydraulic pump 16 can be suitably cooled, depending on the respective temperatures. The flow direction of the cooling air F1 can be changed from the rear side to the front side of the revolving frame 5 by rotating the cooling fans 25C, 25D, 26A, 27A in reverse direction. In this case, a cooling air F2 represented by a dotted arrow passes through the exhaust port 7A of the counterweight 7 to flow into the exterior cover 10, and passes through the radiator for fuel cell 25, the radiator for motor and inverter 26 and the oil cooler 27, and then will be discharged outward of the upper revolving structure 3 through the air flow opening 10D formed on the left surface 10A and the right surface 10B of the exterior cover 10.

With a smaller amount of hydrogen gas in the hydrogen tank 20 of the hydraulic excavator 1 during its operation, a hydrogen gas is filled into the hydrogen tank 20 by moving a vehicle with hydrogen supply equipment (mobile hydrogen supply equipment) to be close to the hydraulic excavator 1, for example. In this case, compressed hydrogen gas is filled into the hydrogen tank 20, with a filling nozzle of the hydrogen supply equipment connected to the hydrogen tank 20 accommodated in the exterior cover 10. For example, as filling hydrogen gas into the vessel, in a case where compressed hydrogen gas leakage occurs due to any malfunction of the hydrogen supply equipment, hydrogen gas is fully filled in the exterior cover 10 and the hydrogen gas can be stagnant around the hydrogen tank 20 until another operation of the hydraulic excavator 1 starts.

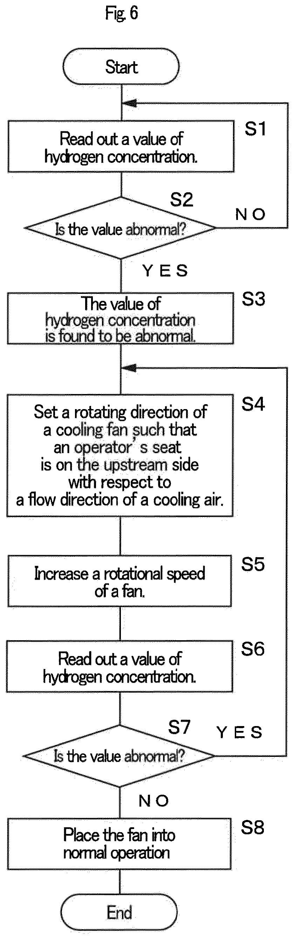

On the other hand, in this embodiment, the hydraulic excavator 1 is configured to discharge hydrogen gas outward of the upper revolving structure 3, using the cooling air F1 generated by the cooling fans 25C, 25D, 26A, 27A when the hydraulic excavator 1 in operation detects the presence of hydrogen gas around the hydrogen tank 20. Control processing performed by the controller 36 for detection and discharge of hydrogen gas during the operation of the hydraulic excavator 1 will be described with reference to Fig. 6.

The control processing is started with the start key 37 by activating the controller 36. In step S1, the controller 36 reads out a value of hydrogen concentration around the hydrogen tank 20 (in the exterior cover 10), based upon a detection signal outputted from the hydrogen sensor 32. In the subsequent step S2, the controller 36 determines whether the value of hydrogen concentration is abnormal or not by comparison with a predetermined normal value. While the controller determines "NO" in step S2, the value judgment is repeated until the controller determines "YES" in step S2, and then in step S3, the value of hydrogen concentration is found to be abnormal.

If the value of hydrogen concentration is found to be abnormal in step S3, any hydrogen gas is considered to be present (stagnant) around the hydrogen tank 20. Thus, the controller 36 supplies control signals to the cooling fans 25C, 25D, 26A, 27A in step S4, and sets rotating directions of the cooling fans 25C, 25D, 26A, 27A such that the operator's seat 9 is on the upstream side of the hydrogen tank 20 with respect to the flow direction of the cooling air. Specifically, the rotating directions of the cooling fans 25C, 25D, 26A, 27A are set so as to generate the cooling air F1 represented by a solid arrow. This configuration allows the outdoor air flowing from the air flow opening 10D into the exterior cover 10 to turn into the cooling air F1 and discharged outward of the upper revolving structure 3 through the exhaust port 7A of the counterweight 7. Consequently, the hydrogen gas present around the hydrogen tank 20 can be discharged outward of the upper revolving structure 3 together with the cooling air F1.

Herein, the operator's seat 9 provided in the cab 8 is disposed on the upstream side of the hydrogen tank 20 with respect to the flow direction of the cooling air F1. Accordingly, the hydrogen gas can be fed away from the operator's seat 9 and discharged outward of the upper revolving structure 3 not through the operator's seat 9. As shown by a dotted arrow in Fig. 2, the cooling air F2 flowing through the exhaust port 7A of the counterweight 7 into the exterior cover 10 and discharged outward of the upper revolving structure 3 through the air flow opening 10D can cool the radiator for fuel cell 25, the radiator for motor and inverter 26 and the oil cooler 27. In this case, in step S4, the controller 36 changes the rotating directions of the cooling fans 25C, 25D, 26A, 27A so as to generate the cooling air F1 in the direction opposite the cooling air F2. In this way, in a case where hydrogen gas is present around the hydrogen tank 20, the controller 36 can set the rotating directions of the cooling fans 25C, 25D, 26A, 27A appropriately to discharge the hydrogen gas outward of the upper revolving structure 3 without allowing the gas to pass through the operator's seat 9.

In the subsequent step S5, the controller 36 supplies control signals to the cooling fans 25C, 25D, 26A, 27A to increase the rotational speed of these fans. This mechanism allows the cooling fans 25C, 25D, 26A, 27A to be driven in constant high-speed rotation, for example, irrespective of the temperature of the cooling water and the temperature of the hydraulic oil. Thus, the hydrogen gas present around the hydrogen tank 20 can be discharged outward of the upper revolving structure 3 (the exterior cover 10) so as to be swiftly swept away from the operator's seat 9.

Next, in step S6, the controller 36 reads out the value of hydrogen concentration around the hydrogen tank 20, based upon a detection signal from the hydrogen sensor 32, and in the subsequent step S7, the controller determines whether the value of hydrogen concentration is abnormal or not. If the controller determines "YES" in step S7, meaning that the hydrogen gas is present around the hydrogen tank 20, the process will return to step S4 to repeat the same steps. Meanwhile, if the controller determines "NO" in step S7, the value of hydrogen concentration around the hydrogen tank 20 is found to return to a normal value. Therefore, in step S8, the controller 36 completes the control processing after switching the operation of the cooling fans 25C, 25D, 26A, 27A to the normal operation. Consequently, the rotations of the cooling fans 25C, 25D, 26A, 27A are individually controlled, depending on the temperature of the cooling water flowing in the cooling water passage 28, the temperature of the cooling water flowing in the cooling water passage 29 and the temperature of the hydraulic oil flowing in the hydraulic passage 30.

In this way, according to this embodiment, e.g., even in a case where an abnormality of the hydrogen supply equipment causes leakage of hydrogen gas around the hydrogen tank 20 in order to fill a new hydrogen gas into the hydrogen tank 20 from the hydrogen supply equipment, the hydrogen gas can be fed away from the operator's seat 9 using the cooling air F1 generated by the cooling fans 25C, 25D, 26A, 27A, and can be discharged outward of the upper revolving structure 3 (the exterior cover 10) through the exhaust port 7A of the counterweight 7, without passing through the operator's seat 9. Even in a case where the cooling fans 25C, 25D, 26A, 27A generate the cooling air F2 in the direction opposite the cooling air F1, the presence of hydrogen gas around the hydrogen tank 20 allows the controller 36 to change the rotating directions of the cooling fans 25C, 25D, 26A, 27A. Consequently, the cooling air F2 can be changed into the cooling air F1 whose flow direction is opposite the cooling air F2 to discharge the hydrogen gas outward of the upper revolving structure 3 so as to be swiftly swept away from the operator's seat 9.

Thus, the hydraulic excavator 1 according to the embodiment has a self-propelled vehicle body (the lower traveling structure 2 and the upper revolving structure 3), the upper revolving structure 3 includes the operator's seat 9, the fuel cell 11 generating power supplied to the electric motor 14, the hydrogen tank 20 storing hydrogen supplied to the fuel cell 11, the heat exchanger 24 cooling the fuel cell 11, and the cooling fans 25C, 25D, 26A, 27A supplying a cooling air to the heat exchanger 24, and the operator's seat 9 is disposed on the upstream side of the hydrogen tank 20 with respect to the flow direction of the cooling air F1 generated by the cooling fans 25C, 25D, 26A, 27A.

According to this configuration, the cooling air F1 flowing from the operator's seat 9 side to the hydrogen tank 20 side can discharge the hydrogen gas present around the hydrogen tank 20 outward of the upper revolving structure 3 so as to be swiftly swept away from the operator's seat 9.

The construction machine in the embodiment includes the shroud 31 introducing the cooling air F1 to the heat exchanger 24, and the cooling fans 25C, 25D, 26A, 27A and the shroud 31 are disposed on the downstream side of the hydrogen tank 20 with respect to the flow direction of the cooling air F1. This configuration can reduce turbulent flow from the cooling air F1 hitting the hydrogen tank 20 and rectify the flow of the cooling air F1 with the shroud 31. Consequently, a large amount of cooling air F1 can be efficiently supplied to the heat exchanger 24 to facilitate the cooling of the fuel cell 11.

In the construction machine in the embodiment, the heat exchanger 24 is disposed on the downstream side of the hydrogen tank 20 with respect to the flow direction of the cooling air F1. According to this configuration, the cooling air F1 is discharged outward of the upper revolving structure 3 without hitting the hydrogen tank 20 after passing through the heat exchanger 24 to be heated. Consequently, the configuration can inhibit high-temperature exposure of the hydrogen tank 20 and prolong the life of the hydrogen tank 20.

In the embodiment, the counterweight 7 constituting the upper revolving structure 3 is provided with the exhaust port 7A located on the downstream of the cooling fans 25C, 25D, 26A, 27A and the shroud 31 with respect to the flow direction of the cooling air F1 and discharging the cooling air F1 outward of the upper revolving structure 3. According to this configuration, the cooling air F1 passing through the heat exchanger 24 is collected by the shroud 31 and can be efficiently discharged outward of the upper revolving structure 3 through the exhaust port 7A.

In the embodiment, the operator's seat 9 is disposed on the front side of the upper revolving structure 3 in the front-rear direction, the hydrogen tank 20 is disposed between the operator's seat 9 and the heat exchanger 24 with respect to the upper revolving structure 3 in the front-rear direction, and the exhaust port 7A discharges the cooling air F1 supplied to the heat exchanger 24 through the hydrogen tank 20 rearward of the upper revolving structure 3. According to this configuration, even if any hydrogen gas is stagnant around the hydrogen tank 20, the hydrogen gas can be discharged outward of the upper revolving structure 3 through the exhaust port 7A so as to be swiftly swept away from the operator's seat 9, using the cooling air F1 supplied from the heat exchanger 24.

The construction machine in the embodiment includes the controller 36 controlling the rotating directions of the cooling fans 25C, 25D, 26A, 27A and the hydrogen sensor 32 detecting hydrogen gas, and the controller 36 switches the rotating directions of the cooling fans 25C, 25D, 26A, 27A such that the operator's seat 9 is on the upstream side of the hydrogen tank 20 with respect to the flow direction of the cooling air F1 when the controller 36 allows the hydrogen sensor 32 to detect the hydrogen gas around the hydrogen tank 20. According to this configuration, in a case where hydrogen gas is present around the hydrogen tank 20, the controller 36 appropriately sets the rotating directions of the cooling fans 25E, 25F. Thus, the flow direction of the cooling air F1 can be changed so as to allow the operator's seat 9 to be on the upstream side of the hydrogen tank 20. Consequently, the hydrogen gas present around the hydrogen tank 20 can be fed away from the operator's seat 9 and swiftly discharged outward of the upper revolving structure 3.

In the embodiment, the heat exchanger 24 is configured to include the radiator for fuel cell 25 cooling the fuel cell 11 and the radiator for motor and inverter 26 cooling the electric motor 14 and the inverter 15 controlling the electric motor 14, and the cooling fans 25C, 25D, 26A are individually provided at the radiator for fuel cell 25 and the radiator for motor and inverter 26, respectively. According to this configuration, the rotations of the cooling fans 25C, 25D and the cooling fan 26A can be individually controlled when the quantity of heat generated by the fuel cell 11 and the quantity of heat generated by the electric motor 14 and the inverter 15 are different. Consequently, the fuel cell 11, the electric motor 14 and the inverter 15 can each be cooled in an optimal state.

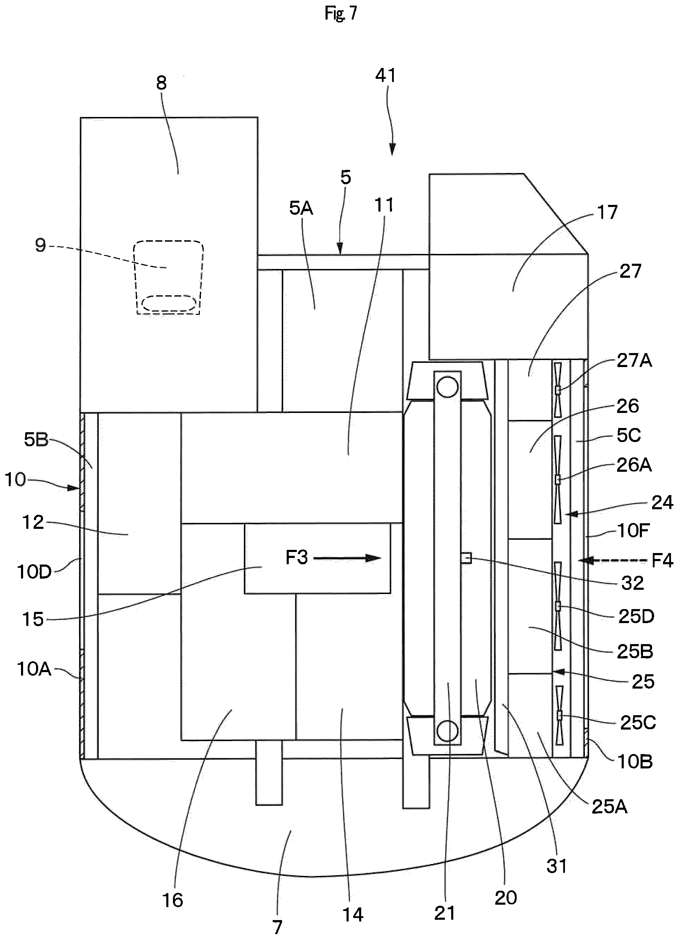

Subsequently, Fig. 7 shows a second embodiment of the present invention. The characteristic of this embodiment lies in the configuration where the cooling air supplied to a heat exchanger through a hydrogen tank is discharged lateralward of an upper revolving structure. In a second embodiment, the component elements that are identical to those of the first embodiment will be simply denoted by the same reference numerals to avoid repetitions of similar explanations.

In the figure, an upper revolving structure 41 is configured to include, similarly to the upper revolving structure 3 in the first embodiment, the revolving frame 5, the counterweight 7, the cab 8 provided with the operator's seat 9 and the like, the exterior cover 10, the fuel cell 11, the electric motor 14, the hydraulic pump 16, the hydrogen tank 20 and the heat exchanger 24. However, in this embodiment, the fuel cell 11, the electric motor 14, the hydraulic pump 16, the hydrogen tank 20 and the heat exchanger 24 are disposed in a different manner from those in the first embodiment.

The counterweight 7 in this embodiment is not provided with the exhaust port 7A of the counterweight 7 shown in the first embodiment. Further, an exhaust port 10F is provided on a right surface 10B of the exterior cover 10 according to this embodiment, in place of the air flow opening 10D according to the first embodiment. The exhaust port 10F is composed of an opening with a large area formed almost entirely over the right surface 10B.

The fuel cell 11 is located rearward of the cab 8 and mounted at a central portion of the revolving frame 5 in the right-and-left direction. The electric motor 14 and the hydraulic pump 16 are disposed between the fuel cell 11 and the counterweight 7 so as to be adjacent to each other in the right-and-left direction. A plurality of hydrogen tank 20 is mounted on the revolving frame 5 so as to be adjacent to the right side of the fuel cell 11 and the electric motor 14 (the right side frame 5C side). The plurality of hydrogen tank 20 is disposed to be aligned in the vertical direction by a rack 21 and to extend in the front-rear direction of the revolving frame 5.

The heat exchanger 24 is located rightward of the hydrogen tank 20 and mounted near a right side frame 5C of the revolving frame 5. The heat exchanger 24 is configured to include a radiator for fuel cell 25, a radiator for motor and inverter 26 and an oil cooler 27. The radiator for fuel cell 25, the radiator for motor and inverter 26 and the oil cooler 27 are disposed to be aligned in the front-rear direction along the right side frame 5C of the revolving frame 5 and faces outward of the upper revolving structure 3 through the exhaust port 10F formed on the right surface 10B of the exterior cover 10.

The radiator for fuel cell 25 has 2 cooling units 25A, 25B, disposed adjacent to the front side of the counterweight 7. Cooling fans 25C, 25D are provided on the right side of the 2 cooling units 25A, 25B, respectively, each unit constituting the radiator for fuel cell 25. The radiator for motor and inverter 26 is disposed adjacent to the front side of the radiator for fuel cell 25, and a cooling fan 26A is provided on the right side of the radiator for motor and inverter 26. The oil cooler 27 is disposed adjacent to the front side of the radiator for motor and inverter 26, and a cooling fan 27A is provided on the right side of the oil cooler 27.

The cooling fans 25C, 25D, 26A, 27A are rotated to allow an outdoor air to flow into the exterior cover 10 through the air flow opening 10D formed on the left surface 10A of the exterior cover 10. The outdoor air turns into a cooling air F3 represented by a solid arrow moving from the left surface 10A to the right surface 10B of the exterior cover 10 and is discharged outward of the upper revolving structure 3 (the exterior cover 10) through the exhaust port 10F of the right surface 10B. At this time, the heat released from the radiator for fuel cell 25, the radiator for motor and inverter 26 and the oil cooler 27 is transferred into the cooling air F3 to cool the fuel cell 11 and an auxiliary machine, the electric motor 14 and the inverter 15, and the hydraulic oil.

Meanwhile, the outdoor air flows through the exhaust port 10F formed on the right surface 10B of the exterior cover 10 into the exterior cover 10 when the cooling fans 25C, 25D, 26A, 27A are rotated in reverse direction to the above-described direction. The outdoor air turns into a cooling air F4 represented by a dotted arrow moving from the right surface 10B onto the left surface 10A of the exterior cover 10 and is discharged outward of the upper revolving structure 3 through the air flow opening 10D of the left surface 10A. Thus, the heat generated from the radiator for fuel cell 25, the radiator for motor and inverter 26 and the oil cooler 27 is released into the cooling air F4.

The upper revolving structure 41 according to this embodiment is configured as described above, and the cooling air F3 represented by a solid arrow or the cooling air F4 represented by a dotted arrow is generated in the exterior cover 10, depending on rotating directions of the cooling fans 25C, 25D, 26A, 27A. The heat generated from the radiator for fuel cell 25, the radiator for motor and inverter 26 and the oil cooler 27 can be released into the cooling air F3 or the cooling air F4 to cool the fuel cell 11 and the auxiliary machine, the electric motor 14 and the inverter 15, and hydraulic oil.

Meanwhile, in a case where for example, an abnormality of hydrogen supply equipment causes hydrogen gas leakage around the hydrogen tank 20 when a new hydrogen gas is filled into the hydrogen tank 20 from the hydrogen supply equipment, a controller 36 sets the rotating directions of the cooling fans 25C, 25D, 26A, 27A so as to generate the cooling air F3 in the exterior cover 10. That is, the rotating direction of the cooling air F3 (if generated) remains unchanged, and the rotating direction of the cooling air F4 (if generated) is changed into reverse direction. Thus, the hydrogen gas stagnant around the hydrogen tank 20 can be discharged outward of the upper revolving structure 41 through the exhaust port 10F of the exterior cover 10 (the right surface 10B), using the cooling air F4. Consequently, the hydrogen gas present around the hydrogen tank 20 can be fed away from the operator's seat 9 and swiftly discharged outward of the upper revolving structure 3.

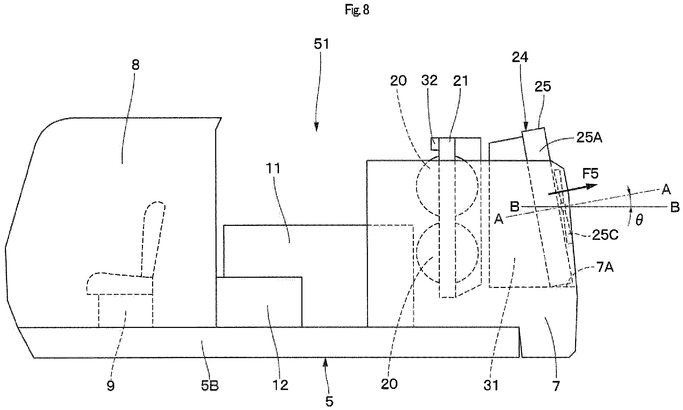

Subsequently, Fig. 8 shows a third embodiment of the present invention. The characteristic of this embodiment lies in the configuration of a cooling fan disposed to incline upward. In the third embodiment, the component elements that are identical to those of the foregoing first embodiment will be simply denoted by the same reference numerals to avoid repetitions of similar explanations.

In the figure, an upper revolving structure 51 is configured to include, similarly to the upper revolving structure 3 in the first embodiment, the revolving frame 5, the counterweight 7, the cab 8 provided with the operator's seat 9 and the like, the exterior cover 10, the fuel cell 11, the electric motor 14, the hydraulic pump 16, the hydrogen tank 20 and the heat exchanger 24. However, in this embodiment, cooling fans 25C, 25D, 26A, 27A constituting the heat exchanger 24 are disposed in a different manner from the first embodiment.

The heat exchanger 24 is configured to include the radiator for fuel cell 25, the radiator for motor and inverter 26 and the oil cooler 27, as in the first embodiment. The radiator for fuel cell 25 has the cooling fans 25C, 25D, the radiator for motor and inverter 26 has the cooling fan 26A, and the oil cooler 27 has the cooling fan 27A. Herein, assuming that a rotational axis of the cooling fan 25C is defined as A-A and a straight line extending in the horizontal direction of the upper revolving structure 4 is defined as B-B, the rotational axis A-A of the cooling fan 25C inclines upward by an angle θ with respect to the straight line B-B in the horizontal direction. Similarly, a rotational axis of the cooling fan 25D of the radiator for fuel cell 25, the cooling fan 26A of the radiator for motor and inverter 26 and the cooling fan 27A of the oil cooler 27 also inclines upward by an angle θ with respect to the straight line B-B in the horizontal direction.

In this way, in this embodiment, the cooling fans 25C, 25D of the radiator for fuel cell 25, the cooling fan 26Aof the radiator for motor and inverter 26 and the cooling fan 27A of the oil cooler 27 are disposed to incline upward with respect to the upper revolving structure 3 in the horizontal direction. Accordingly, the upper revolving structure 51 is configured to discharge a cooling air F5 represented by a solid line passing through the radiator for fuel cell 25, the radiator for motor and inverter 26 and the oil cooler 27 upward from the horizontal direction from the upper revolving structure 51 through the exhaust port 7A of the counterweight 7.

The upper revolving structure 51 according to this embodiment is configured as described above, and its basic operational effect is not particularly different from that in the first embodiment. However, according to this embodiment, the cooling fans 25C, 25D, 26A, 27A constituting the heat exchanger 24 are disposed upward with respect to the upper revolving structure 51 in the horizontal direction. This configuration can inhibit discharge of the cooling air heated by passing through the heat exchanger 24 to an operator present rearward of the counterweight 7. In addition, the hydrogen gas stagnant around the hydrogen tank 20 can be discharged upward from the exhaust port 7A of the counterweight 7 in order to discharge the hydrogen gas outward of the upper revolving structure 51, using the cooling air. Thus, no air flow opening for discharging hydrogen gas that is lighter than the air needs to be provided on the upper surface 10C of the exterior cover 10 to achieve no intrusion of rain water into the exterior cover 10 through the air flow opening.

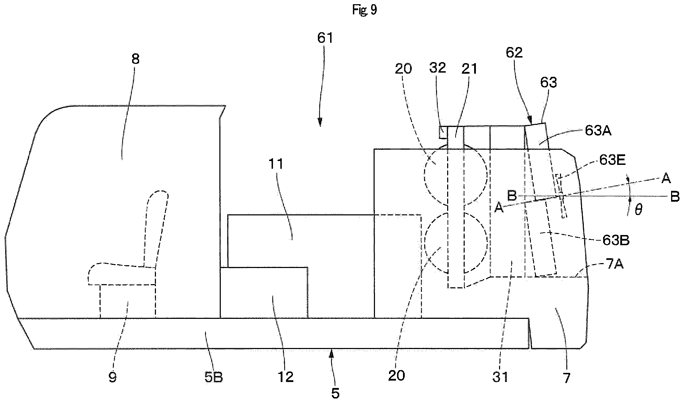

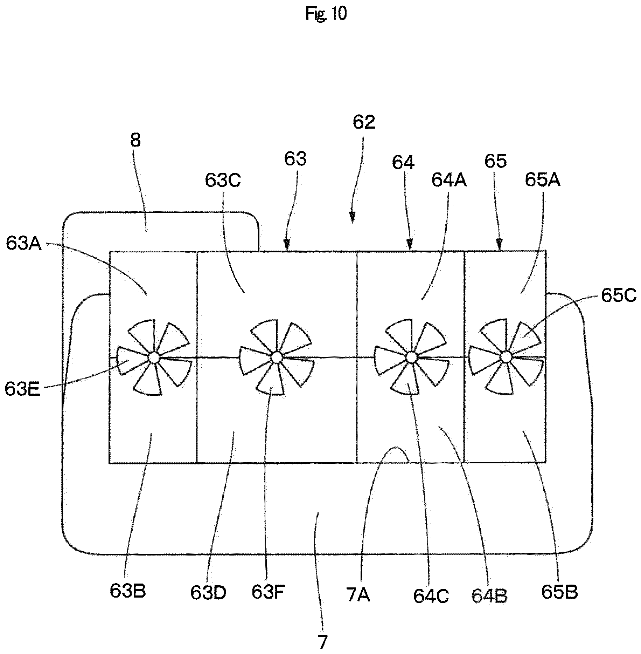

Subsequently, Figs. 9 and 10 show a fourth embodiment of the present invention. The characteristic of this embodiment lies in the configuration of a heat exchanger by the connection of a plurality of cooling units and the arrangement of cooling fans disposed to incline upward. In the fourth embodiment, the component elements that are identical to those of the foregoing first embodiment will be simply denoted by the same reference numerals to avoid repetitions of similar explanations.

In the figure, an upper revolving structure 61 is configured to include, similarly to the upper revolving structure 3 in the first embodiment, the revolving frame 5, the counterweight 7, the cab 8 provided with the operator's seat 9 and the like, the exterior cover 10, the fuel cell 11, the electric motor 14, the hydraulic pump 16, the hydrogen tank 20 and a heat exchanger 62. However, in this embodiment, the heat exchanger 62 is configured in a different manner from the heat exchanger 24 according to the first embodiment.

The heat exchanger 62, similarly to the heat exchanger 24 according to the first embodiment, is located between the counterweight 7 and the hydrogen tank 20 and is mounted rearward of the revolving frame 5. The heat exchanger 62 is configured to include a radiator for fuel cell 63, a radiator for motor and inverter 64 and an oil cooler 65. The radiator for fuel cell 63, the radiator for motor and inverter 64 and the oil cooler 65 are disposed to be aligned in the right-and-left direction of the revolving frame 5 and face outward of the upper revolving structure 61 through the exhaust port 7A of the counterweight 7.

The radiator for fuel cell 63 is configured by the connection of a plurality of (e.g., 4) cooling units 63A, 63B, 63C, 63D. A cooling fan 63E is disposed between the cooling units 63A and 63B, and a cooling fan 63F is disposed between the cooling units 63C and 63D. Herein, a rotational axis A-A of the cooling fans 63E, 63F inclines upward by an angle θ with respect to a straight line B-B in the horizontal direction.

The radiator for motor and inverter 64 is configured by the connection of a plurality of **(e.g.,** 2) cooling units 64A, 64B. A cooling fan 64C is disposed between the cooling units 64A and 64B. The oil cooler 65 is configured by the connection of a plurality of (e.g., 2) cooling units 65A, 65B. A cooling fan 65C is disposed between the cooling units 65A and 65B. Herein, a rotational axis of the cooling fans 64C, 65C inclines upward by an angle θ with respect to the horizontal direction, similarly to the cooling fans 63E, 63F of the radiator for fuel cell 63.

The upper revolving structure 61 according to this embodiment is configured as described above, and its basic operational effect is not particularly different from that in the first embodiment. However, according to this embodiment, the cooling fans 63E, 63F, 64C, 65C constituting the heat exchanger 62 are disposed upward with respect to the upper revolving structure 61 in the horizontal direction. This configuration can inhibit discharge of the cooling air heated by passing through the heat exchanger 62 to an operator present rearward of the counterweight 7. In addition, the hydrogen gas stagnant around the hydrogen tank 20 can be discharged upward from the exhaust port 7A of the counterweight 7 in order to discharge the hydrogen gas outward of the upper revolving structure 61, using the cooling air.

Moreover, according to this embodiment, the radiator for fuel cell 63 of the heat exchanger 62 is configured by the connection of a plurality of cooling units 63A, 63B, 63C, 63D. Likewise, the radiator for motor and inverter 64 is configured by the connection of a plurality of cooling units 64A, 64B, and the oil cooler 65 is configured by the connection of a plurality of cooling units 65A, 65B. Thus, for the upper revolving structure 61 with a limited space for installing devices, the degree of freedom for installing a plurality of cooling units 63A, 63B, 63C, 63D can be higher than the installation of a single, large-volume radiator for fuel cell 63. This advantage also applies to the radiator for motor and inverter 64 and the oil cooler 65.

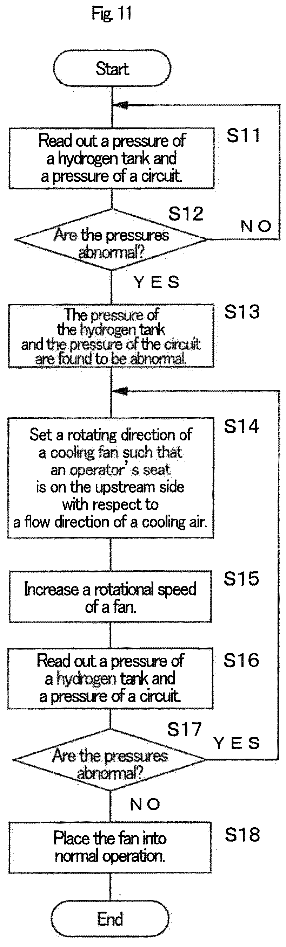

In the embodiment, the case where the controller 36 detects the hydrogen gas and the hydrogen gas is discharged outward of the upper revolving structure 3 (the exterior cover 10) when hydrogen gas leakage occurs in the exterior cover 10 and the gas gets stagnant around the hydrogen tank 20 during the filling of hydrogen gas into the hydrogen tank 20 is illustrated. However, the present invention is not limited to that, and as in a first modification shown in Fig. 11, for example, with the pressure in the hydrogen tank 20 or the pressure in the hydrogen gas line 22 (pressure circuit) decreased, the construction machine may be configured to allow the controller 36 to determine that any hydrogen gas can be present around the hydrogen tank 20 and the air in the exterior cover 10 to be discharge outward.

Fig. 11 shows control processing performed by the controller 36. In step S11, the controller 36 reads out the pressure in the hydrogen tank 20 or the pressure in the hydrogen gas line 22 to determine whether the pressure is abnormally decreased/lowered or not in step S12. In step S12, if the controller 36 determines "YES", and in step S13, the pressure in the hydrogen tank 20 or the pressure in the hydrogen gas line 22 is found to be abnormally decreased/lowered, and the process will proceed to step S14.

Thus, in step S14, the controller 36 sets rotating directions of the cooling fans 25C, 25D, 26A, 27A such that the operator's seat 9 is on the upstream side of the hydrogen tank 20 with respect to a flow direction of the cooling air, and in step S15, the controller 36 increases the rotational speeds of the cooling fan 25C and the like. Thereafter, in step S16, the controller 36 reads out the pressure in the hydrogen tank 20 or the hydrogen gas line 22 to determine whether the pressure is abnormal or not in step S17.

Then, in step S17, if the controller 36 determines "YES", the process will return to step S14 to continue the control thereafter, and if the controller determines "NO" in step S17, the cooling fans 25C, 25D, 26A, 27A will be normally operated in step S18 and the control processing will be completed. Thus, the construction machine may be configured to discharge the air in the exterior cover 10 outward when any hydrogen gas can be present around the hydrogen tank 20.

In this case, whether any hydrogen gas can be present around the hydrogen tank 20 or not may be determined, based upon whether the remaining amount of the hydrogen gas in the hydrogen tank 20 is abnormally decreased/lowered or not. That is, the construction machine may be configured to read out the remaining amount of the hydrogen gas in the hydrogen tank 20 in steps S11 and S16 in Fig. 11 and determine whether the remaining amount of the hydrogen gas is abnormally decreased/lowered or not in steps S12 and S17.

In the first embodiment, the case where the radiator for fuel cell 25, the radiator for motor and inverter 26 and the oil cooler 27, each constituting the heat exchanger 24, are disposed from the left side to the right side of the revolving frame 5 is illustrated. However, the present invention is not limited to that, and the radiator for fuel cell 25, the radiator for motor and inverter 26 and the oil cooler 27 are disposed in no particular order with respect to the revolving frame 5 in the right-and-left direction. Likewise, in the second embodiment, the radiator for fuel cell 25, the radiator for motor and inverter 26 and the oil cooler 27 are disposed in no particular order with respect to the revolving frame 5 in the front-rear direction.

### DESCRIPTION OF REFERENCE NUMERALS

2: Lower traveling structure (Vehicle body)
3, 41, 51, 61: Upper revolving structure (Vehicle body)
7: Counterweight
7A: Exhaust port
9: Operator's seat
10: Exterior cover
10F: Exhaust port
11: Fuel cell
14: Electric motor
20: Hydrogen tank
24, 62: Heat exchanger
25, 63: Radiator for fuel cell
25C, 25D, 26A, 27A, 63E, 63F, 64C, 65C: Cooling fan
26, 64: Radiator for motor and inverter
27, 65: Oil cooler
31: Shroud
32: Hydrogen sensor
36: Controller

## Claims

1. A construction machine having a self-propelled vehicle body, wherein
the vehicle body comprises: an operator's seat; a fuel cell generating power supplied to an electric motor; a hydrogen tank storing hydrogen supplied to the fuel cell; a heat exchanger cooling the fuel cell; and a cooling fan supplying a cooling air to the heat exchanger, **characterized in that**
the operator's seat is disposed on the upstream side of the hydrogen tank with respect to a flow direction of the cooling air generated by the cooling fan.

2. The construction machine according to claim 1, comprising a shroud introducing the cooling air to the heat exchanger, wherein
the cooling fan and the shroud are disposed on the downstream side of the hydrogen tank with respect to the flow direction of the cooling air.

3. The construction machine according to claim 1, wherein
the heat exchanger is disposed on the downstream side of the hydrogen tank with respect to the flow direction of the cooling air.

4. The construction machine according to claim 2, comprising an exhaust port located on the downstream of the cooling fan and the shroud with respect to the flow direction of the cooling air and discharging the cooling air outward of the vehicle body.

5. The construction machine according to claim 4, wherein
the operator's seat is disposed on the front side of the vehicle body in the front-rear direction,
the hydrogen tank is disposed between the operator's seat and the heat exchanger with respect to the vehicle body in the front-rear direction, and
the exhaust port discharges the cooling air supplied to the heat exchanger through the hydrogen tank rearward of the vehicle body.

6. The construction machine according to claim 4, wherein
the operator's seat is disposed on one side of the vehicle body in the right-and-left direction,
the hydrogen tank is disposed between the operator's seat and the heat exchanger with respect to the vehicle body in the right-and-left direction, and
the exhaust port discharges the cooling air supplied to the heat exchanger through the hydrogen tank lateralward.

7. The construction machine according to claim 1, comprising: a controller controlling a rotating direction of the cooling fan; and
a hydrogen sensor detecting hydrogen gas, wherein
the controller switches the rotating direction of the cooling fan such that the operator's seat is on the upstream side of the hydrogen tank with respect to the flow direction of the cooling air when the controller allows the hydrogen sensor to detect hydrogen gas around the hydrogen tank.

8. The construction machine according to claim 1, wherein
the cooling fan is disposed to incline upward.

9. The construction machine according to claim 1, wherein
the heat exchanger is configured to include a radiator for fuel cell cooling the fuel cell and a radiator for motor and inverter cooling the electric motor and an inverter controlling the electric motor, wherein
the cooling fan is individually provided for the radiator for fuel cell and the radiator for motor and inverter.
